# EUROPEAN PATENT SPECIFICATION

(11) **EP 2 645 679 B1**
(45) Date of publication and mention of the grant of the patent: **19.08.2015**
(21) Application number: 11786125.2
(22) Date of filing: 03.06.2011
(51) Int. Cl.: H04L 29/12

(54) **Method and apparatus for message transmission**
Verfahren und Vorrichtung zur Nachrichtenübertragung
Procédé et appareil de transmission de messages

(30) Priority: 25.11.2010 CN 201010591093
(43) Date of publication of application: 02.10.2013
(60) Divisional application: 15165063.7
(73) Proprietor: Huawei Technologies Co., Ltd., Longgang District Shenzhen, Guangdong 518129 (CN)
(72) Inventor: LU, Xushan, Shenzhen Guangdong 518129 (CN); ZHOU, Qian, Shenzhen Guangdong 518129 (CN); PENG, Jun, Shenzhen Guangdong 518129 (CN); ZOU, Ting, Shenzhen Guangdong 518129 (CN)
(74) Representative: Epping - Hermann - Fischer
(86) International application number: PCT/CN2011/075289
(87) International publication number: WO 2011/147353

(56) References cited:
- CN-A- 1 633 100
- CN-A- 1 925 458
- CN-A- 101 459 576
- CN-A- 101 873 252
- US-A1- 2010 175 123
- BOUCADAIR M ET AL: "Provider-Provisioned CPE: IPv4 Connectivity Access in the context of IPv4 address exhaustion; draft-boucadair-port-range-00.txt", PROVIDER-PROVISIONED CPE: IPV4 CONNECTIVITY ACCESS IN THE CONTEXT OF IPV4 ADDRESS EXHAUSTION; DRAFT-BOUCADAIR-PORT-RANGE-00.TXT, INTERNET ENGINEERING TASK FORCE, IETF; STANDARDWORKINGDRAFT, INTERNET SOCIETY (ISOC) 4, RUE DES FALAISES CH- 1205 GENEVA,, 23 October 2008 (2008-10-23), XP015057392,
- SHIRASAKI Y ET AL: "NAT444 with ISP Shared Address; draft-shirasaki-nat444-isp-shared-addr-01. txt", NAT444 WITH ISP SHARED ADDRESS; DRAFT-SHIRASAKI-NAT444-ISP-SHARED-ADDR-01. TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 9 March 2009 (2009-03-09), XP015061756,
- CHENG HUAWEI TECHNOLOGIES D: "NAT44 with Pre-allocated Ports; draft-cheng-behave-nat44-pre-allocated-por ts-01.txt", NAT44 WITH PRE-ALLOCATED PORTS; DRAFT-CHENG-BEHAVE-NAT44-PRE-ALLOCATED-POR TS-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 12 October 2010 (2010-10-12), pages 1-10, XP015071589, [retrieved on 2010-10-12]
- TSOU T ET AL: "Port Management To Reduce Logging In Large-Scale NATs; draft-tsou-behave-natx4-log-reduction-02.t xt", PORT MANAGEMENT TO REDUCE LOGGING IN LARGE-SCALE NATS; DRAFT-TSOU-BEHAVE-NATX4-LOG-REDUCTION-02.T XT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 30 September 2010 (2010-09-30), pages 1-10, XP015071419, [retrieved on 2010-09-30]
- GABOR BAJKO TEEMU SAVOLAINEN NOKIA M BOUCADAIR P LEVIS FRANCE TELECOM: "Port Restricted IP Address Assignment; draft-bajko-pripaddrassign-03.txt", PORT RESTRICTED IP ADDRESS ASSIGNMENT; DRAFT-BAJKO-PRIPADDRASSIGN-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 3, 28 September 2010 (2010-09-28), pages 1-19, XP015071355, [retrieved on 2010-09-28]
- WING CISCO D: "Pinhole Control Protocol (PCP); draft-wing-pcp-base-01.txt", PINHOLE CONTROL PROTOCOL (PCP); DRAFT-WING-PCP-BASE-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 26 October 2010 (2010-10-26), pages 1-36, XP015072404, [retrieved on 2010-10-26]
- CUI J WU D WU TSINGHUA UNIVERSITY Y: "B4 translated DS-lite enable AFTR to serve more B4s; draft-cui-softwire-b4-translated-ds-lite-0 0.txt", B4 TRANSLATED DS-LITE ENABLE AFTR TO SERVE MORE B4S; DRAFT-CUI-SOFTWIRE-B4-TRANSLATED-DS-LITE-0 0.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 18 October 2010 (2010-10-18), pages 1-11, XP015071783, [retrieved on 2010-10-18]

## Description

### FIELD OF TECHNOLOGY

The present invention relates to the field of network communication technology, and particularly to a method and an apparatus for message transmission.

### BACKGROUND

With the evolution of IPv6 and the exhausting of IPv4 addresses, and since the evolution of IPv6 of the whole industry chain is relatively hysteretic, IPv4 and IPv6 will coexist for a long time. Currently, the widely used solution is to make scale arrangement of the NAT (Network Address Translation) devices, and generally one NAT device supports tens of thousands or even more users. In a case where a user equipment needs to transmit a message to an external network, a plurality of links need to be established on the corresponding NAT device, and each link requires establishing an NAT entry on the corresponding NAT device. Thus, there is a problem that the NAT devices have heavier burdens and support less users.

The following IETF Internet-Drafts are considered relevant prior art:
SHIRASAKI Y ET AL: "NAT444 with ISP Shared Address; draft-shirasaki-nat444-isp-shared-addr-01.txt", March 9, 2009, discloses the NAT444 model, which is composed of IPv6, and IPv4 with Large Scale NAT (LSN).
CHENG D: "NAT44 with Pre-allocated Ports; draft-cheng-behave-nat44-pre-allocated-ports-01.txt", October 11, 2010, specifies a NAT44 operation model where external ports are pre-allocated per subscriber.
TSOU T ET AL: "Port Management To Reduce Logging In Large-Scale NATs; draft-tsou-behave-natx4-log-reduction-02.txt", September 30, 2010, discloses port allocation to the users in blocks.

### SUMMARY

The embodiments of the present invention provide a method and an apparatus for message transmission, which can reduce the burden of the NAT device and enable the NAT device to support more users.

A method for message transmission comprises:
according to a received request message sent from an internal network device, assigning , by a network address translation, NAT, device, a range of external ports sent from the internal network device to the NAT device and a range of external ports sent from the NAT device to an external network, the range of external ports sent from the internal network device to the NAT device is the same as the range of external ports sent from the NAT device to the external network, and transmitting , by the NAT device, to the internal network device a response message including the range of external ports, wherein the request message comprises a Pinhole Control Protocol, PCP, message or a Dynamic Host Configuration Protocol, DHCP, message;
establishing, by the NAT device, the NAT entries according to the range of external ports;
receiving, by the internal network device, a forward message sent from a user equipment to the external network;
transmitting, by the internal network device, the forward message after replacing a source port number of the forward message with the range of external ports, and replacing a source address thereof with a private network IP address of an internal network device;
receiving, by the NAT device, the forward message sent from the internal network device to the external network; and
transmitting, by the NAT device, the forward message after replacing a source address of the forward message with a public network IP address according to a private network IP address, a range of external ports and the public network IP address of the internal network device, which are contained in network address translation NAT entries;
wherein alternative to receiving, by the NAT device, the forward message sent from the internal network device to the external network; and transmitting, by the NAT device, the forward message after replacing a source address of the forward message with a public network IP address according to a private network IP address, a range of external ports and the public network IP address of the internal network device, which are contained in network address translation NAT entries; the method comprises:
receiving, by the NAT device, a reverse message sent from the external network to the internal network device; and
transmitting, by the NAT device, the reverse message after replacing a destination public network IP address of the reverse message sent from the external network to the internal network device, with the private network IP address of the internal network device according to the private network IP address, the range of external ports and the public network IP address of the internal network device, which are contained in the network address translation, NAT, entries.

An apparatus for message transmission comprises:
an internal network receiving unit at an internal network device end, configured to receive a forward message sent from a user equipment to an external network;
an internal network forward message transmitting unit at the internal network device end, configured to replace a source port number of the forward message with a range of external ports, and replace a source address with a private network IP address of the internal network device, and transmit the forward message;
an external network receiving unit at a network address translation, NAT, device end, configured to receive the forward message sent from the internal network device to the external network, or a reverse message sent from the external network to the internal network device;
an external network forward message transmitting unit at the NAT device end, configured to replace a source address of the forward message sent from the internal network device to the external network with a public network IP address according to a private network IP address, a range of external ports and the public network IP address of the internal network device, which are contained in network address translation NAT entries, and transmit the forward message; and
an external network reverse message transmitting unit at the NAT device end, configured to replace a destination public network IP address of the reverse message sent from the external network to the internal network device with the private network IP address of the internal network device according to the private network IP address, the range of external ports and the public network IP address of the internal network device, which are contained in the network address translation, NAT, entries, and transmit the reverse message;
a port assigning unit at the NAT device end, configured to assign a range of external ports sent from the internal network device to the NAT device and a range of external ports sent from the NAT device to the external network, the range of external ports sent from the internal network device to the NAT device is the same as the range of external ports sent from the NAT device to the external network, according to a received request message sent from the internal network device, and transmit a response message including the range of external ports to the internal network device, wherein the request message comprises a Pinhole Control Protocol, PCP, message or a Dynamic Host Configuration Protocol, DHCP, message; and
a NAT entry establishing unit at the NAT device end, configured to establish the NAT entries according to the range of external ports.

As can be seen from the technical solutions provided by the embodiments of the present invention, in the NAT device, the source address of the forward message is replaced by the public network IP address, and the destination public network IP address of the reverse message is replaced by the private network IP address of the internal network device, according to the private network IP address, the range of external ports and the public network IP address of the internal network device, which are contained in the network address translation NAT entries. That is, during an access to the external network by the user, the NAT device establishes an entry only every time the internal network device gets online, and no entry needs to be established when a message is subsequently sent to establish links, thus reducing the number of entries established in the NAT device. Accordingly, the NAT device can support more users, and thus the number of NAT devices is reduced and synchronization can be achieved between the internal network device and the NAT device when the NAT device aging occurs.

### BRIEF DESCRIPTION OF THE DRAWINGS

In order to more clearly describe the technical solutions of the embodiments of the present invention, the drawings to be used in the descriptions of the embodiments are briefly introduced as follows. Obviously, the following drawings just illustrate some embodiments of the present invention, and a person skilled in the art can obtain other drawings from these drawings without paying any creative effort.
FIG. 1 is a flow diagram of a method for message transmission at an NAT device end according to an embodiment of the present invention;
FIG. 2 is a flow diagram of a method for message transmission at an internal network device end according to an embodiment of the present invention;
FIG. 3 is a signaling flow diagram in which a user equipment performs message transmission with an external network through an internal network device and an NAT device according to an embodiment of the present invention;
FIG. 4 is a flow diagram of a method for an internal network device to apply for an external port range and to perform a message transmission with an external network according to an embodiment of the present invention;
FIG. 5 is a structural schematic diagram of an apparatus for message transmission according to an embodiment of the present invention.

### DETAILED DESCRIPTION

The technical solutions of the embodiments of the present invention will be clearly and completely described as follows with reference to the drawings. Apparently, the described embodiments are just a part of embodiments of the present invention rather than all the embodiments. Based on the embodiments of the present invention, any other embodiment obtained by a person skilled in the art without paying any creative effort will fall within the protection scope of the present invention.

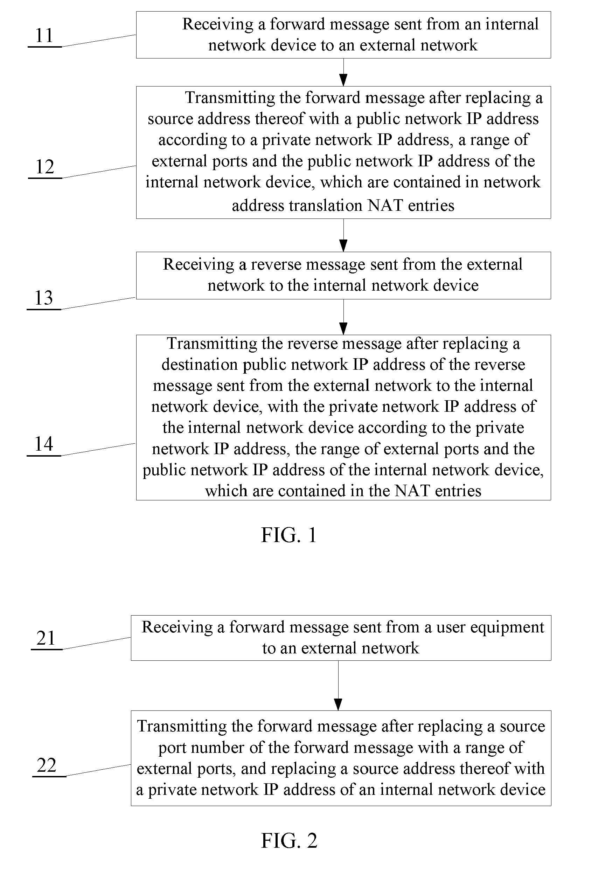

The embodiment of the present invention provides a method for message transmission. As illustrated in FIG. 1, the method specifically may include:
Step 11: receiving a forward message sent from an internal network device to an external network.

Specifically, when sending a forward message to an external network, a user equipment firstly transmits the forward message to an NAT device through an internal network device, and the NAT device receives the forward message.
Step 12: transmitting the forward message after replacing the source address of the forward message with the public network IP address according to the private network IP address, the range of external ports and the public network IP address of the internal network device, which are contained in NAT entries.

Specifically, the NAT device establishes the NAT entries for the internal network device when the internal network device gets online, wherein the NAT entry contain the private network IP address of the internal network device, and the range of external ports and the public network IP address assigned to the internal network device; and after receiving the forward message sent from the internal network device to the external network, the NAT device replaces the source address of the forward message with the public network IP address, and transmits the forward message to the external network.

Or,
Step 13: receiving a reverse message sent from the external network to the internal network device.

Specifically, when sending the reverse message to the internal network device, the external network firstly transmits the reverse message to an NAT device, and the NAT device receives the reverse message.
Step 14: transmitting the reverse message after replacing a destination public network IP address of the reverse message sent from the external network to the internal network device, with the private network IP address of the internal network device according to the private network IP address, the range of external ports and the public network IP address of the internal network device, which are contained in the NAT entries.

Specifically, the NAT device establishes NAT entries for the internal network device when the internal network device gets online, wherein the NAT entry contain the private network IP address of the internal network device, and the range of external ports and the public network IP address assigned to the internal network device; after receiving the reverse message sent from the external network to the internal network device, the NAT device replaces the destination public network IP address of the reverse message with the private network IP address of the internal network device, and transmits the reverse message to the internal network device.

The embodiment of the present invention further provides a method for message transmission. As illustrated in FIG. 2, the method specifically includes:
Step 21: receiving a forward message sent from a user equipment to an external network.

Specifically, when sending the forward message to the external network, the user equipment firstly transmits the forward message to an internal network device connected thereto, and the internal network device receives the forward message.
Step 22: transmitting the forward message after replacing a source port number of the forward message with a range of external ports, and replacing a source address thereof with a private network IP address of the internal network device.

Specifically, after receiving the forward message sent from the user equipment to the external network, the internal network device replaces the source port number of the forward message with the range of external ports assigned by the NAT device, and replaces the source address with the private network IP address of the internal network device, and transmits the forward message to the NAT device.

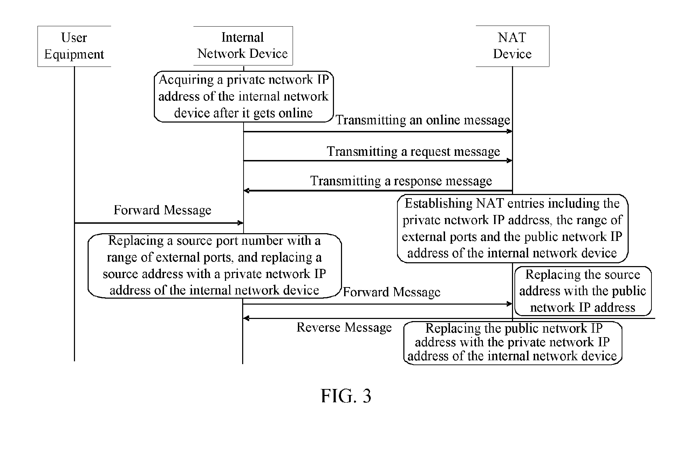

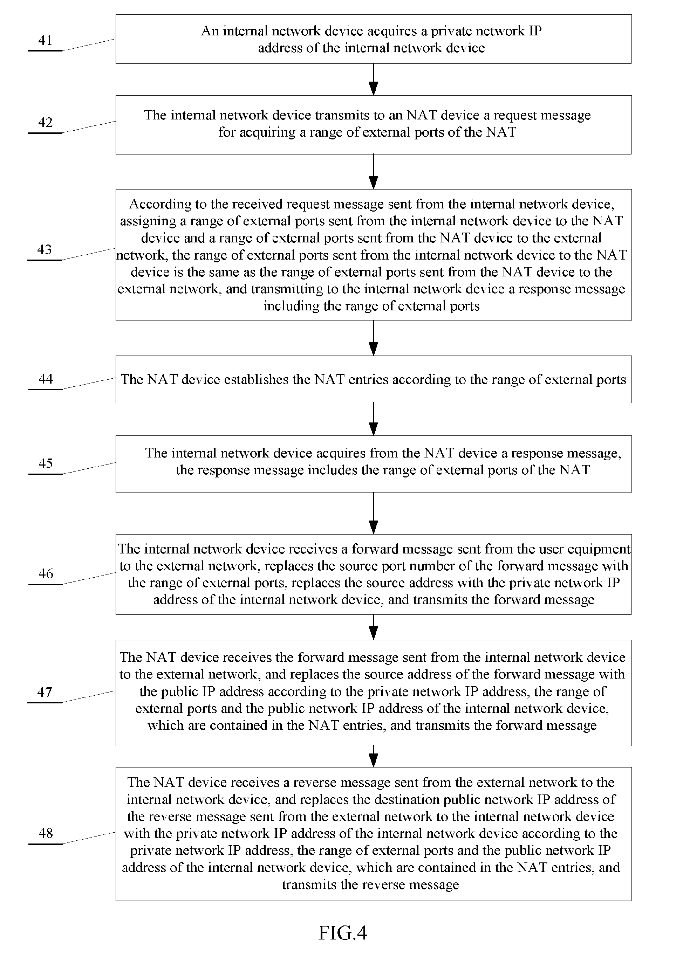

The embodiment is further described as follows through a process in which the user equipment performs a message transmission with the external network via the internal network device and the NAT device. Referring to FIG. 3 for the detailed signaling flow, the devices involved therein include a user equipment, an internal network device and an NAT device, wherein the internal network device may be a CPE (Customer Premises Equipment), and the NAT device may be a CGN (Carrier-Grade NAT). When the CPE is of a bridge type, the user equipment needs to support the function of the CPE, i.e., the internal network device is the user equipment itself in that case. When a tunnel scene is employed between the CPE and the CGN, the CGN needs to encapsulate and decapsulate the tunnel. As illustrated in FIG. 4, the detailed process may include:
Step 41: an internal network device acquires a private network IP address of the internal network device.

Specifically, when the internal network device (e.g., CPE) gets online, the internal network device's private network IP address may be acquired through a DHCP (Dynamic Host Configuration Protocol) or by means of PPPoE. After the private network IP address is acquired, an online notification is sent to the NAT device (e.g., CGN).
Step 42: the internal network device transmits to the NAT device a request message for acquiring a range of external ports of the NAT.

Specifically, after acquiring the private network IP address of the internal network device, the internal network device transmits to the NAT device a request message. The request message carries the private network IP address of the internal network device, so that the NAT device may acquire the private network IP address of the internal network device. The request message may be based on PCP (Pinhole Control Protocol), and may specifically be a pinhole request message, or a DHCP-based request message, and may specifically be a DHCP discover message. The request message is used by the internal network device to negotiate with the NAT device for a range of external ports, the range of external ports serve as the range of external ports for transmission from the internal network device to the NAT device and the range of external ports for transmission from the NAT device to the external network, the range of external ports for transmission from the internal network device to the NAT device is same as the range of external ports for transmission from the NAT device to the external network.

Further, the carrier-grade NAT device (CGN) generally has an NAT public network address pool, and the public network address of the user equipment after NAT process is randomly selected from the pool, thus it cannot be ensured that the public network address of a single user equipment after NAT process maintains the same IP address. In the current network, there are many applications that require establishing a plurality of links, after NAT process, the public network address of the plurality of links need to be a same IP address, the links cannot be established if the public network addresses of these links after NAT process are not the same one. Thus, the internal network device may further negotiate the public network IP address of the message sent from the user equipment connected to the internal network device and after NAT process, so that the user equipment may employ the same IP address during the subsequent link, thereby avoiding the situation that a link cannot be established.
Step 43: according to the received request message sent by the internal network device, assigning a range of external ports sent from the internal network device to the NAT device and a range of external ports sent from the NAT device to the external network, the range of external ports sent from the internal network device to the NAT device is same as the range of external ports sent from the NAT device to the external network, and transmitting to the internal network device a response message including the range of external ports.

Specifically, after receiving the request message sent by the internal network device, the NAT device may assign, based on the condition of the user equipment, the range of external ports sent from the internal network device to the NAT device and the range of external ports sent from the NAT device to the external network (discontinuous range of external ports may be assigned, such as ~2000∼3000 and 4000∼ 5000; when the internal network device accesses an external network address, generally 100~300 links are established, and each link will establish an entry in the NAT device; but by assigning the range of external ports sent from the internal network device to the NAT device and the range of external ports sent from the NAT device to the external network, which are the same as each other, during the access to the external network by the internal network device, the NAT device establishes an entry every time the internal network device gets online; no entry needs to be established when a message is subsequently sent to establish links, and an external port is selected from the range of external ports for a transmission, and thus the number of entries established in the NAT device is reduced, and the internal network device and the NAT device can be synchronized with each other when the NAT device ages), and transmits the assigned range of external ports to the internal network device in form of a response message, which specifically may be a Pinhole Response message or a DHCP offer message. In that case, if the range of external ports assignable by the NAT device has exhausted, an error response message may be returned to the internal network device. In addition, if the number of users increases subsequently and the applied range of external ports is insufficient, a dynamic negotiation may be made to extend the range of external ports.

The NAT device can also assign a public network IP address corresponding to the internal network device, and carry the public network IP address in a response message under certain condition to transmit the response message carried with the public network IP address carried therein to the internal network device. The certain condition may be that the internal network device further requests in the request message to negotiate the public network IP address. The notification of the translated public network IP address to the internal network device enables the user equipment connected to the internal network device to use the same IP address in the subsequent link, thereby avoiding the situation that a link cannot be established. In addition, the above notification also can effectively utilize the advantage of a relatively stronger ALG (Application Level Gateway) function currently had by the internal network device, so that the NAT device does not need a corresponding ALG.
Step 44: the NAT device establishes the NAT entries according to the range of external ports.

Specifically, after the NAT device assigns to the internal network device the range of external ports sent from the internal network device to the NAT device, the range of external ports sent from the NAT device to the external network, and the corresponding public network IP address, the NAT device establishes therein corresponding NAT entries. The NAT entries includes the private network IP address of the internal network device, the range of external ports sent from the internal network device to the NAT device, the public network IP address and the range of external ports sent from the NAT device to the external network. Wherein the range of external ports sent from the internal network device to the NAT device is the same as the range of external ports sent from the NAT device to the external network.
Step 45: the internal network device acquires from the NAT device a response message that contains the range of external ports of the NAT.

Specifically, after the internal network device receives the response message sent from the NAT device, the internal network device stores the corresponding range of external ports. When the public network IP address is applied for in step 42, the public network IP address is also stored.
Step 46: the internal network device receives a forward message sent from the user equipment to the external network, replaces the source port number of the forward message with the range of external ports, replaces the source address with the private network IP address of the internal network device, and transmits the forward message.

Specifically, when the user equipment needs to send a forward message to the external network, the user equipment firstly transmits the forward message to the internal network device, wherein the forward message contains a source address, a destination address, a source port number and a destination port number. After the internal network device receives the forward message sent from the user equipment to the external network, the internal network device replaces the source port number with the range of external ports, replaces the source address with the private network IP address of the internal network device, and transmits the forward message to the NAT device from a certain port in the range of external ports.
Step 47: the NAT device receives the forward message sent from the internal network device to the external network, and according to the private network IP address, the range of external ports and the public network IP address of the internal network device, which are contained in the network address translation NAT entries, replaces the source address of the forward message with the public network IP address, and transmits the forward message.

Specifically, after the NAT device receives the forward message sent from the internal network device to the external network, the NAT device searches the stored NAT entries for an entry matched with the private network IP address and the range of external ports of the internal network device of the forward message, replaces the source address with the public network IP address of the matched entry, and transmits the forward message to the external network from a certain port in the range of external ports.
Step 48: the NAT device receives a reverse message sent from the external network to the internal network device, and according to the private network IP address, the range of external ports and the public network IP address of the internal network device, which are contained in the network address translation NAT entries, replaces the destination public network IP address of the reverse message sent from the external network to the internal network device with the private network IP address of the internal network device, and transmits the reverse message.

Specifically, when the external network sends a reverse message to the internal network device through the NAT device, the NAT device receives the reverse message sent from the external network to the internal network device, wherein the reverse message contains a source address, a destination address, a source port number and a destination port number, and the destination address is a public network IP address. The NAT device searches the stored NAT entries for an entry matched with the destination public network IP address and the range of external ports having the destination port number within the range, replaces the destination public network IP address with the private network IP address of the internal network device of the matched entry, and transmits the reverse message to the internal network device.

According to this embodiment, in the NAT device, the source address of the forward message is replaced with the public network IP address, and the destination public network IP address of the reverse message is replaced with the private network IP address of the internal network device, according to the private network IP address, the range of external ports and the public network IP address of the internal network device, which are contained in the network address translation NAT entries. That is, during an access to the external network by the user, the NAT device establishes an entry only every time the internal network device gets online, and no entry needs to be established when a message is subsequently sent to establish links. Thus the number of entries established in the NAT device is reduced, the NAT device can support more users and thus the number of the NAT devices is reduced, and the internal network device and the NAT device can be synchronized with each other when the NAT device ages.

A person skilled in the art is appreciable that all or a part of flows in the methods according to the above embodiments may be implemented by instructing relevant hardware through a computer program that may be stored in a computer readable storage medium, and when being executed, the program includes the flows of the above method embodiments. In which, the storage medium may be magnetic disk, optical disk, Read-Only Memory (ROM) or Random Access Memory (RAM), etc.

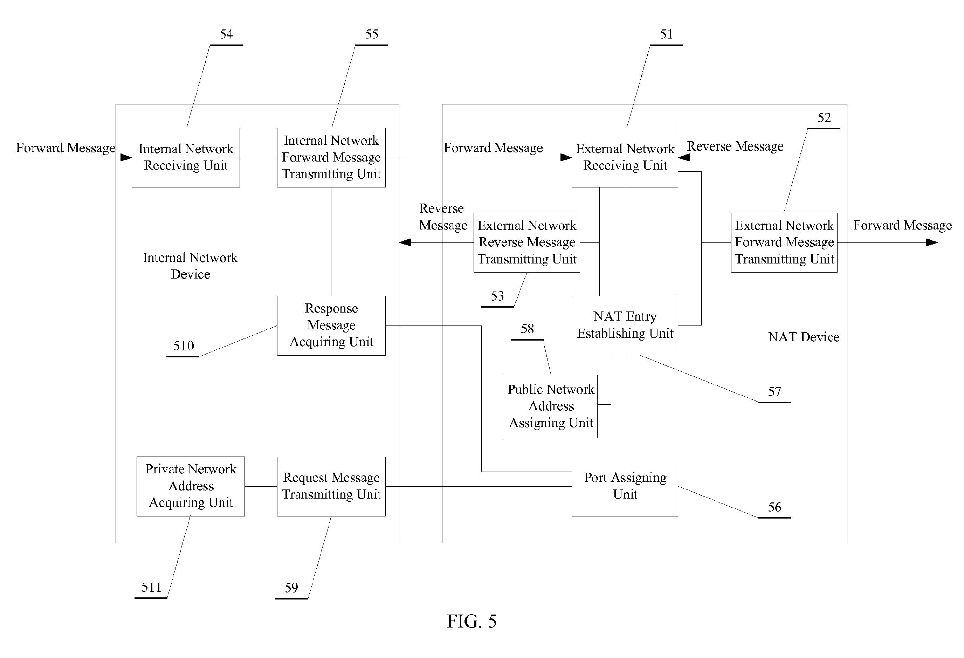

The embodiment of the present invention also provides an apparatus for message transmission. As illustrated in FIG. 5, at the NAT device end, the apparatus includes an external network receiving unit 51, an external network forward message transmitting unit 52 and an external network reverse message transmitting unit 53. The external network receiving unit 51 is configured to receive a forward message sent from an internal network device to an external network, or a reverse message sent from the external network to the internal network device. The external network forward message transmitting unit 52 is configured to replace the source address of the forward message sent from the internal network device to the external network with the public network IP address according to the private network IP address, the range of external ports and the public network IP address of the internal network device, which are contained in the NAT entries, and transmit the forward message. The external network reverse message transmitting unit 53 is configured to replace the destination public network IP address of the reverse message sent from the external network to the internal network device with the private network IP address of the internal network device according to the private network IP address, the range of external ports and the public network IP address of the internal network device, which are contained in the NAT entries, and transmit the reverse message. At the internal network device end, the apparatus may include an internal network receiving unit 54 and an internal network forward message transmitting unit 55. The internal network receiving unit 54 is configured to receive a forward message sent from a user equipment to the external network. The internal network forward message transmitting unit 55 is configured to replace the source port number of the forward message with the range of external ports, and replace the source address with the private network IP address of the internal network device, and transmit the forward message.

Further, at the NAT device end, the apparatus may further include a port assigning unit 56, an NAT entry establishing unit 57 and a public network address assigning unit 58. The port assigning unit 56 is configured to assign a range of external ports sent from the internal network device to the NAT device and a range of external ports sent from the NAT device to the external network, the range of external ports sent from the internal network device to the NAT device is same as the range of external ports sent from the NAT device to the external network, according to a received request message sent by the internal network device, and transmit a response message including the range of external ports to the internal network device. The NAT entry establishing unit 57 is configured to establish the NAT entries according to the range of external ports. The public network address assigning unit 58 is configured to assign the public network IP address of the forward message sent to the external network after being translated by the NAT device, and carry the public network IP address in the response message under a certain condition to transmit them together to the internal network device; the certain condition may be that the internal network device further requests to negotiate the public network IP address in the request message. At the internal network device end, the apparatus may further include a request message transmitting unit 59, a response message acquiring unit 510 and a private network address acquiring unit 511. The request message transmitting unit 59 is configured to transmit a request message for acquiring the range of external ports of the NAT before receiving the forward message sent from the user equipment to the external network. The response message acquiring unit 510 is configured to acquire a response message, the response message includes the range of external ports after NAT process. The private network address acquiring unit 511 is configured to acquire the private network IP address of the internal network device, and carry the private network IP address of the internal network device in the request message.

Further, in the NAT device, the corresponding NAT entry establishing unit is specifically configured to establish entries including the private network IP address, the range of external ports and the public network IP address of the internal network device. In the internal network device, the corresponding request message is also used for acquiring the public network IP address translated by the NAT device.

According to this embodiment, in the NAT device, the source address of the forward message is replaced with the public network IP address, and the destination public network IP address of the reverse message is replaced with the private network IP address of the internal network device, according to the private network IP address, the range of external ports and the public network IP address of the internal network device, which are contained in the NAT entries. That is, during an access to the external network by the user, the NAT device establishes an entry every time the internal network device gets online, and no entry needs to be established when a message is subsequently sent to establish links. Thus, the number of entries established in the NAT device is reduced, the NAT device can support more users and thus the number of the NAT devices is reduced, and the internal network device and the NAT device can be synchronized with each other when the NAT device ages. Please refer to the descriptions of the method embodiments for the implementations of the processing functions of respective units included in the above apparatus, and herein are omitted.

The above descriptions are just preferred embodiments of the present invention, and the protection scope of the present invention is not limited thereto. The protection scope of the present invention should be determined by the protection scope of the claims.

## Claims

1. A method for message transmission, the method comprising:
according to a received request message sent from an internal network device, assigning (43) , by a network address translation, NAT, device, a range of external ports sent from the internal network device to the NAT device and a range of external ports sent from the NAT device to an external network, the range of external ports sent from the internal network device to the NAT device is the same as the range of external ports sent from the NAT device to the external network, and transmitting, by the NAT device, to the internal network device a response message including the range of external ports, wherein the request message comprises a Pinhole Control Protocol, PCP, message or a Dynamic Host Configuration Protocol, DHCP, message;
establishing (44), by the NAT device, the NAT entries according to the range of external ports;
receiving (21), by the internal network device, a forward message sent from a user equipment to the external network;
transmitting (22), by the internal network device, the forward message after replacing a source port number of the forward message with the range of external ports, and replacing a source address thereof with a private network IP address of an internal network device;
receiving (11), by the NAT device, the forward message sent from the internal network device to the external network; and
transmitting (12), by the NAT device, the forward message after replacing a source address of the forward message with a public network IP address according to a private network IP address, a range of external ports and the public network IP address of the internal network device, which are contained in network address translation NAT entries;
wherein alternative to receiving (11), by the NAT device, the forward message sent from the internal network device to the external network; and transmitting (12), by the NAT device, the forward message after replacing a source address of the forward message with a public network IP address according to a private network IP address, a range of external ports and the public network IP address of the internal network device, which are contained in network address translation NAT entries; the method comprises:
receiving (13), by the NAT device, a reverse message sent from the external network to the internal network device; and
transmitting (14), by the NAT device, the reverse message after replacing a destination public network IP address of the reverse message sent from the external network to the internal network device, with the private network IP address of the internal network device according to the private network IP address, the range of external ports and the public network IP address of the internal network device, which are contained in the network address translation, NAT, entries.

2. The method according to claim 1, **characterized in that** the method further comprises assigning the public network IP address of the forward message sent to the external network after being translated by the NAT device, carrying the public network IP address in the response message and transmitting the response message with the public network IP address carried therein to the internal network device.

3. The method according to claim 2, **characterized in that** the request message carries the private network IP address of the internal network device, and the NAT entry contains the private network IP address, the public network IP address and the range of external ports of the internal network device.

4. The method according to claim 1, **characterized in that** before receiving (21), by the internal network device, the forward message sent from the user equipment to the external network, the method further comprises:
transmitting, by the internal network device, a request message for acquiring the range of external ports of a network address translation NAT; and
acquiring a response message including the range of external ports after NAT process.

5. The method according to claim 4, **characterized in that** before transmitting the request message for acquiring the range of external ports of the network address translation NAT, the method further comprises:
acquiring the private network IP address of the internal network device, and carrying the private network IP address of the internal network device in the request message.

6. The method according to claim 4 or 5, **characterized in that** the request message is further used for acquiring a public network IP address translated by an NAT device.

7. An apparatus for message transmission, the apparatus comprising:
an internal network receiving unit (54) at an internal network device end, configured to receive a forward message sent from a user equipment to an external network;
an internal network forward message transmitting unit (55) at the internal network device end, configured to replace a source port number of the forward message with a range of external ports, and replace a source address with a private network IP address of an internal network device, and transmit the forward message;
an external network receiving unit (51) at a network address translation, NAT, device end, configured to receive the forward message sent from the internal network device to the external network, or a reverse message sent from the external network to the internal network device;
an external network forward message transmitting unit (52) at the NAT device end, configured to replace a source address of the forward message sent from the internal network device to the external network with a public network IP address according to a private network IP address, a range of external ports and the public network IP address of the internal network device, which are contained in network address translation NAT entries, and transmit the forward message;
an external network reverse message transmitting unit (53) at the NAT device end, configured to replace a destination public network IP address of the reverse message sent from the external network to the internal network device with the private network IP address of the internal network device according to the private network IP address, the range of external ports and the public network IP address of the internal network device, which are contained in the network address translation, NAT, entries, and transmit the reverse message;
a port assigning unit (56) at the NAT device end, configured to assign a range of external ports sent from the internal network device to the NAT device and a range of external ports sent from the NAT device to the external network, the range of external ports sent from the internal network device to the NAT device is the same as the range of external ports sent from the NAT device to the external network, according to a received request message sent from the internal network device, and transmit a response message including the range of external ports to the internal network device, wherein the request message comprises a Pinhole Control Protocol, PCP, message or a Dynamic Host Configuration Protocol, DHCP, message; and
a NAT entry establishing unit (57) at the NAT device end, configured to establish the NAT entries according to the range of external ports.

8. The apparatus according to claim 7, **characterized in that** the apparatus further comprises:
a public network address assigning unit (58) at the NAT device end, configured to assign the public network IP address of the forward message sent to the external network after being translated by the NAT device, and carry the public network IP address in the response message under a certain condition and transmit the response message with the public network IP address carried therein to the internal network device end.

9. The apparatus according to claim 8, **characterized in that** the NAT entry establishing unit (57) is specifically configured to establish the entries including the private network IP address, the range of external ports and the public network IP address of the internal network device.

10. The apparatus according to claim 7, **characterized in that** the apparatus further comprises, at the internal network device end:
a request message transmitting unit (59), configured to transmit a request message for acquiring the range of external ports of a network address translation NAT before receiving the forward message sent from the user equipment to the external network; and
a response message acquiring unit (510), configured to acquire a response message, the response message includes the range of external ports after NAT process.

11. The apparatus according to claim 10, **characterized in that** the apparatus further comprises, at the internal network device end:
a private network address acquiring unit (511), configured to acquire the private network IP address of the internal network device, and carry the private network IP address of the internal network device in the request message.

12. The apparatus according to claim 10 or 11, **characterized in that** the request message is further used for acquiring a public network IP address translated by the NAT device.

## Patentansprüche

1. Verfahren zur Nachrichtenübertragung, wobei das Verfahren Folgendes umfasst:
gemäß einer von einer Vorrichtung eines inneren Netzes gesendeten empfangenen Anforderungsnachricht Zuweisen (43) durch eine Netzadressenumsetzungsvorrichtung (network address translation device, NAT-Vorrichtung) eines Bereichs von äußeren Ports, der von der Vorrichtung des inneren Netzes an die NAT-Vorrichtung gesendet wird, und eines Bereichs von äußeren Ports, der von der NAT-Vorrichtung an ein äußeres Netz gesendet wird, wobei der Bereich von äußeren Ports, der von der Vorrichtung des inneren Netzes an die NAT-Vorrichtung gesendet wird, der gleiche wie der Bereich der äußeren Ports, der von der NAT-Vorrichtung an das äußere Netz gesendet wird, ist, und Senden durch die NAT-Vorrichtung einer Antwortnachricht, die den Bereich der äußeren Ports enthält, an die Vorrichtung des inneren Netzes, wobei die Anforderungsnachricht eine "Pinhole"-Steuerprotokoll-Nachricht (Pinhole Control Protocol message, PCP-Nachricht) oder eine Nachricht eines dynamischen Host-Konfigurationsprotokolls (Dynamic Host Configuration Protocol message, DHCP-Nachricht) umfasst;
Herstellen (44) durch die NAT-Vorrichtung der NAT-Einträge gemäß dem Bereich der äußeren Ports;
Empfangen (21) durch die Vorrichtung des inneren Netzes einer von einem Anwendergerät an das äußere Netz gesendeten Weiterleitungsnachricht;
Senden (22) durch die Vorrichtung des inneren Netzes der Weiterleitungsnachricht nach dem Ersetzen einer Quell-Port-Nummer der Weiterleitungsnachricht durch den Bereich der äußeren Ports und dem Ersetzen einer Quelladresse davon durch eine private Netz-IP-Adresse einer Vorrichtung eines inneren Netzes;
Empfangen (11) durch die NAT-Vorrichtung der von der Vorrichtung des inneren Netzes an das äußere Netz gesendeten Weiterleitungsnachricht; und
Senden (12) durch die NAT-Vorrichtung der Weiterleitungsnachricht nach dem Ersetzen einer Quelladresse der Weiterleitungsnachricht durch eine öffentliche Netz-IP-Adresse gemäß einer privaten Netz-IP-Adresse, eines Bereichs der äußeren Ports und der öffentlichen Netz-IP-Adresse der Vorrichtung des inneren Netzes, die in den Netzadressenumsetzungseinträgen, NAT-Einträgen, enthalten sind;
wobei alternativ zum Empfangen (11) durch die NAT-Vorrichtung der von der Vorrichtung des inneren Netzes an das äußere Netz gesendeten Weiterleitungsnachricht und zum Senden (12) durch die NAT-Vorrichtung der Weiterleitungsnachricht nach dem Ersetzen einer Quelladresse der Weiterleitungsnachricht durch eine öffentliche Netz-IP-Adresse gemäß einer privaten Netz-IP-Adresse, eines Bereichs der äußeren Ports und der öffentlichen Netz-IP-Adresse der Vorrichtung des inneren Netzes, die in Netzadressenumsetzungseinträgen, NAT-Einträgen, enthalten sind; das Verfahren Folgendes umfasst:
Empfangen (13) einer von dem äußeren Netz an die Vorrichtung des inneren Netzes gesendeten Rücknachricht durch die NAT-Vorrichtung; und
Senden (14) durch die NAT-Vorrichtung der Rücknachricht nach dem Ersetzen einer öffentlichen Ziel-Netz-IP-Adresse der von dem äußeren Netz an die Vorrichtung des inneren Netzes gesendeten Rücknachricht durch die private Netz-IP-Adresse der Vorrichtung des inneren Netzes gemäß der privaten Netz-IP-Adresse, dem Bereich der äußeren Ports und der öffentlichen Netz-IP-Adresse der Vorrichtung des inneren Netzes, die in den Netzadressenumsetzungseinträgen, NAT-Einträgen, enthalten sind.

2. Verfahren nach Anspruch 1, **dadurch gekennzeichnet, dass** das Verfahren ferner Zuweisen der öffentlichen Netz-IP-Adresse der Weiterleitungsnachricht, die an das äußere Netz gesendet wird, nachdem sie durch die NAT-Vorrichtung umgesetzt worden ist, Führen der öffentlichen Netz-IP-Adresse in der Antwortnachricht und Senden der Antwortnachricht mit der darin geführten öffentlichen Netz-IP-Adresse an die Vorrichtung des inneren Netzes umfasst.

3. Verfahren nach Anspruch 2, **dadurch gekennzeichnet, dass** die Anforderungsnachricht die private Netz-IP-Adresse der Vorrichtung des inneren Netzes führt und der NAT-Eintrag die private Netz-IP-Adresse, die öffentliche Netz-IP-Adresse und den Bereich der äußeren Ports der Vorrichtung des inneren Netzes enthält.

4. Verfahren nach Anspruch 1, **dadurch gekennzeichnet, dass** vor dem Empfangen (21) der von dem Anwendergerät an das äußere Netz gesendeten Weiterleitungsnachricht durch die Vorrichtung des inneren Netzes das Verfahren ferner Folgendes umfasst:
Senden durch die Vorrichtung des inneren Netzes einer Anforderungsnachricht zum Erfassen des Bereichs der äußeren Ports einer Netzadressenumsetzung, NAT; und
Erfassen einer Antwortnachricht, die den Bereich der äußeren Ports nach dem NAT-Prozess enthält.

5. Verfahren nach Anspruch 4, **dadurch gekennzeichnet, dass** vor dem Senden der Anforderungsnachricht zum Erfassen des Bereichs der äußeren Ports der Netzadressenumsetzung, NAT, das Verfahren ferner Folgendes umfasst:
Erfassen der privaten Netz-IP-Adresse der Vorrichtung des inneren Netzes und Führen der privaten Netz-IP-Adresse der Vorrichtung des inneren Netzes in der Anforderungsnachricht.

6. Verfahren nach Anspruch 4 oder 5, **dadurch gekennzeichnet, dass** die Anforderungsnachricht ferner zum Erfassen einer durch eine NAT-Vorrichtung umgesetzten öffentlichen Netz-IP-Adresse verwendet wird.

7. Vorrichtung zur Nachrichtenübertragung, wobei die Vorrichtung Folgendes umfasst:
eine Empfangseinheit (54) eines inneren Netzes an einem Ende einer Vorrichtung eines inneren Netzes, wobei die Empfangseinheit (54) des inneren Netzes konfiguriert ist, eine von einem Anwendergerät an ein äußeres Netz gesendete Weiterleitungsnachricht zu empfangen;
eine Weiterleitungsnachricht-Sendeeinheit (55) eines inneren Netzes an dem Ende der Vorrichtung des inneren Netzes, wobei die Weiterleitungsnachricht-Sendeeinheit (55) des inneren Netzes konfiguriert ist, eine Quell-Port-Nummer der Weiterleitungsnachricht durch einen Bereich der äußeren Ports zu ersetzen und eine Quelladresse durch eine private Netz-IP-Adresse einer Vorrichtung eines inneren Netzes zu ersetzen und die Weiterleitungsnachricht zu senden;
eine Empfangseinheit (51) eines äußeren Netzes an einem Ende einer Netzadressenumsetzungsvorrichtung, NAT-Vorrichtung, wobei die Empfangseinheit (51) des äußeren Netzes konfiguriert ist, die von der Vorrichtung des inneren Netzes an das äußere Netz gesendete Weiterleitungsnachricht oder eine von dem äußeren Netz an die Vorrichtung des inneren Netzes gesendete Rücknachricht zu empfangen;
eine Weiterleitungsnachricht-Sendeeinheit (52) eines äußeren Netzes an dem Ende der NAT-Vorrichtung, wobei die Weiterleitungsnachricht-Sendeeinheit (52) des äußeren Netzes konfiguriert ist, eine Quelladresse der von der Vorrichtung des inneren Netzes an das äußere Netz gesendeten Weiterleitungsnachricht durch eine öffentliche Netz-IP-Adresse gemäß einer privaten Netz-IP-Adresse, einem Bereich der äußeren Ports und der öffentlichen Netz-IP-Adresse der Vorrichtung des inneren Netzes, die in Netzadressenumsetzungseinträgen, NAT-Einträgen, enthalten sind, zu ersetzen und die Weiterleitungsnachricht zu senden;
eine Rücknachricht-Sendeeinheit (53) eines äußeren Netzes an dem Ende der NAT-Vorrichtung, wobei die Rücknachricht-Sendeeinheit (53) des äußeren Netzes konfiguriert ist, eine öffentliche Ziel-Netz-IP-Adresse der von dem äußeren Netz an die Vorrichtung des inneren Netzes gesendeten Rücknachricht durch die private Netz-IP-Adresse der Vorrichtung des inneren Netzes gemäß der privaten Netz-IP-Adresse, dem Bereich der äußeren Ports und der öffentlichen Netz-IP-Adresse der Vorrichtung des inneren Netzes,
die in den Netzadressenumsetzungseinträgen, NAT-Einträgen, enthalten sind, zu ersetzen und die Rücknachricht zu senden;
eine Port-Zuweisungseinheit (56) an dem Ende der NAT-Vorrichtung, wobei die Port-Zuweisungseinheit (56) konfiguriert ist, einen Bereich der äußeren Ports, der von der Vorrichtung des inneren Netzes an die NAT-Vorrichtung gesendet wird, und einen Bereich der äußeren Ports, der von der NAT-Vorrichtung an das äußere Netz gesendet wird, wobei der Bereich der äußeren Ports, der von der Vorrichtung des inneren Netzes an die NAT-Vorrichtung gesendet wird, der gleiche wie der Bereich der äußeren Ports, der von der NAT-Vorrichtung an das äußere Netz gesendet wird, ist, gemäß einer von der Vorrichtung des inneren Netzes gesendeten empfangenen Anforderungsnachricht zuzuweisen und eine Antwortnachricht, die den Bereich der äußeren Ports enthält, an die Vorrichtung des inneren Netzes zu senden, wobei die Anforderungsnachricht eine "Pinhole"-Steuerprotokoll-Nachricht, PCP-Nachricht, oder eine Nachricht eines dynamischen Host-Konfigurationsprotokolls, DHCP-Nachricht umfasst; und
eine NAT-Eintrag-Herstellungseinheit (57) an dem Ende der NAT-Vorrichtung, wobei die NAT-Eintrag-Herstellungseinheit (57) konfiguriert ist, die NAT-Einträge gemäß dem Bereich der äußeren Ports herzustellen.

8. Vorrichtung nach Anspruch 7, **dadurch gekennzeichnet, dass** die Vorrichtung ferner Folgendes umfasst:
eine Zuweisungseinheit (58) für öffentliche Netzadressen an dem Ende der NAT-Vorrichtung, wobei die Zuweisungseinheit (58) für öffentliche Netzadressen konfiguriert ist, die öffentliche Netz-IP-Adresse der an das äußere Netz gesendeten Weiterleitungsnachricht, nachdem sie durch die NAT-Vorrichtung umgesetzt worden ist, zuzuweisen und die öffentliche Netz-IP-Adresse unter einer bestimmten Bedingung in der Antwortnachricht zu führen und die Antwortnachricht mit der darin geführten öffentlichen Netz-IP-Adresse an das Ende der Vorrichtung des inneren Netzes zu senden.

9. Vorrichtung nach Anspruch 8, **dadurch gekennzeichnet, dass** die NAT-Eintrag-Herstellungseinheit (57) spezifisch konfiguriert ist, die Einträge, die die private Netz-IP-Adresse, den Bereich der äußeren Ports und die öffentliche Netz-IP-Adresse der Vorrichtung des inneren Netzes enthalten, herzustellen.

10. Vorrichtung nach Anspruch 7, **dadurch gekennzeichnet, dass** die Vorrichtung an dem Ende der Vorrichtung des inneren Netzes ferner Folgendes umfasst:
eine Anforderungsnachricht-Sendeeinheit (59), die konfiguriert ist, eine Anforderungsnachricht zum Erfassen des Bereichs der äußeren Ports einer Netzadressenumsetzung, NAT, vor dem Empfangen der von dem Anwendergerät an das äußere Netz gesendeten Weiterleitungsnachricht zu senden; und
eine Antwortnachricht-Erfassungseinheit (510), die konfiguriert ist, eine Antwortnachricht zu erfassen, wobei die Antwortnachricht den Bereich der äußeren Ports nach dem NAT-Prozess enthält.

11. Vorrichtung nach Anspruch 10, **dadurch gekennzeichnet, dass** die Vorrichtung an dem Ende der Vorrichtung des inneren Netzes ferner Folgendes umfasst:
eine Erfassungseinheit (511) für private Netzadressen, die konfiguriert ist, die private Netz-IP-Adresse der Vorrichtung des inneren Netzes zu erfassen und die private Netz-IP-Adresse der Vorrichtung des inneren Netzes in der Anforderungsnachricht zu führen.

12. Vorrichtung nach Anspruch 10 oder 11, **dadurch gekennzeichnet, dass** die Anforderungsnachricht ferner zum Erfassen einer durch die NAT-Vorrichtung umgesetzten öffentlichen Netz-IP-Adresse verwendet wird.

## Revendications

1. Procédé de transmission de message, le procédé comprenant :
selon un message de requête reçu envoyé par un dispositif de réseau interne, l'assignation (43), par un dispositif de traduction d'adresse de réseau, NAT, d'une plage de ports externes envoyée par le dispositif de réseau interne au dispositif NAT et d'une plage de ports externes envoyée par le dispositif NAT à un réseau externe, la plage de ports externes envoyée par le dispositif de réseau interne au dispositif NAT étant la même que la plage de ports externes envoyée par le dispositif NAT au réseau externe, et la transmission, par le dispositif NAT, au dispositif de réseau interne d'un message de réponse comportant la plage de ports externes, dans lequel le message de requête comprend un message de protocole de commande pinhole, PCP, ou un message de protocole de configuration d'hôte dynamique, DHCP ;
l'établissement (44), par le dispositif NAT, des entrées NAT en fonction de la plage de ports externes ;
la réception (21), par le dispositif de réseau interne, d'un message aller envoyé par un équipement utilisateur au réseau externe ;
la transmission (22), par le dispositif de réseau interne, du message aller après le remplacement d'un numéro de port source du message aller par la plage de ports externes,
et le remplacement d'une adresse source de celui-ci par une adresse IP de réseau privé d'un dispositif de réseau interne ;
la réception (11), par le dispositifNAT, du message aller envoyé par le dispositif de réseau interne au réseau externe ; et
la transmission (12), par le dispositif NAT, du message aller après le remplacement d'une adresse source du message aller par une adresse IP de réseau public en fonction d'une adresse IP de réseau privé, d'une plage de ports externes et de l'adresse IP de réseau public du dispositif de réseau interne, lesquelles sont contenues dans les entrées de traduction d'adresse de réseau, NAT;
dans lequel en variante à la réception (11), par le dispositif NAT, du message aller envoyé par le dispositif de réseau interne au réseau externe ; et la transmission (12), par le dispositif NAT, du message aller après le remplacement d'une adresse source du message aller par une adresse IP de réseau public en fonction d'une adresse IP de réseau privé, d'une plage de ports externes et de l'adresse IP de réseau public du dispositif de réseau interne,
lesquelles sont contenues dans les entrées de traduction d'adresse de réseau, NAT; le procédé comprend :
la réception (13), par le dispositif NAT, d'un message retour envoyé par le réseau externe au dispositif de réseau interne ; et
la transmission (14), par le dispositif NAT, du message retour après le remplacement d'une adresse IP de réseau public destinataire du message retour envoyé par le réseau externe au dispositif de réseau interne, par l'adresse IP de réseau privé du dispositif de réseau interne en fonction de l'adresse IP de réseau privé, de la plage de ports externes et de l'adresse IP de réseau public du dispositif de réseau interne, lesquelles sont contenues dans les entrées de traduction d'adresse de réseau, NAT.

2. Procédé selon la revendication 1, **caractérisé en ce que** le procédé comprend en outre l'assignation de l'adresse IP de réseau public du message aller envoyé au réseau externe après sa traduction par le dispositif NAT, l'inclusion de l'adresse IP de réseau public dans le message de réponse et la transmission du message de réponse avec l'adresse IP de réseau public incluse dans celui-ci au dispositif de réseau interne.

3. Procédé selon la revendication 2, **caractérisé en ce que** le message de requête inclut l'adresse IP de réseau privé du dispositif de réseau interne, et l'entrée NAT contient l'adresse IP de réseau privé, l'adresse IP de réseau public et la plage de ports externes du dispositif de réseau interne.

4. Procédé selon la revendication 1, **caractérisé en ce qu'**il comprend en outre avant la réception (21), par le dispositif de réseau interne, du message aller envoyé par l'équipement utilisateur au réseau externe :
la transmission, par le dispositif de réseau interne, d'un message de requête pour acquérir la plage de ports externes d'une traduction d'adresse de réseau, NAT; et
l'acquisition d'un message de réponse comportant la plage de ports externes après le processus NAT.

5. Procédé selon la revendication 4, **caractérisé en ce qu'**il comprend en outre avant la transmission du message de requête pour acquérir la plage de ports externes de la traduction d'adresse de réseau, NAT:
l'acquisition de l'adresse IP de réseau privé du dispositif de réseau interne, et l'inclusion de l'adresse IP de réseau privé du dispositif de réseau interne dans le message de requête.

6. Procédé selon la revendication 4 ou 5, **caractérisé en ce que** le message de requête est utilisé en outre pour acquérir une adresse IP de réseau public traduite par un dispositif NAT.

7. Appareil de transmission de message, l'appareil comprenant :
une unité de réception de réseau interne (54) située côté dispositif de réseau interne, configurée pour recevoir un message aller envoyé par un équipement utilisateur à un réseau externe ;
une unité de transmission de message aller de réseau interne (55) situé côté dispositif de réseau interne, configurée pour remplacer un numéro de port source du message aller par une plage de ports externes, et remplacer une adresse source par une adresse IP de réseau privé d'un dispositif de réseau interne, et transmettre le message aller ;
une unité de réception de réseau externe (51) située côté dispositif de traduction d'adresse de réseau, NAT, configurée pour recevoir le message aller envoyé par le dispositif de réseau interne au réseau externe, ou un message retour envoyé par le réseau externe au dispositif de réseau interne ;
une unité de transmission de message aller de réseau externe (52) située côté dispositif NAT, configurée pour remplacer une adresse source du message aller envoyé par le dispositif de réseau interne au réseau externe par une adresse IP de réseau public en fonction d'une adresse IP de réseau privé, d'une plage de ports externes et de l'adresse IP de réseau public du dispositif de réseau interne, lesquelles sont contenues dans les entrées de traduction d'adresse de réseau, NAT, et transmettre le message aller ;
une unité de transmission de message retour de réseau externe (53) située côté dispositif NAT, configurée pour remplacer une adresse IP de réseau public destinataire du message retour envoyé par le réseau externe au dispositif de réseau interne par l'adresse IP de réseau privé du dispositif de réseau interne en fonction de l'adresse IP de réseau privé, de la plage de ports externes et de l'adresse IP de réseau public du dispositif de réseau interne, lesquelles sont contenues dans les entrées de traduction d'adresse de réseau, NAT, et transmettre le message retour ;
une unité d'assignation de port (56) située côté dispositif NAT, configurée pour assigner une plage de ports externes envoyée par le dispositif de réseau interne au dispositif NAT et une plage de ports externes envoyée par le dispositif NAT au réseau externe, la plage de ports externes envoyée par le dispositif de réseau interne au dispositif NAT étant la même que la plage de ports externes envoyée par le dispositif NAT au réseau externe, en fonction d'un message de requête reçu envoyé par le dispositif de réseau interne, et transmettre un message de réponse comportant la plage de ports externes au dispositif de réseau interne, dans lequel le message de requête comprend un message de protocole de commande pinhole, PCP, ou un message de protocole de configuration d'hôte dynamique, DHCP; et
une unité d'établissement d'entrée NAT (57) située côté dispositif NAT, configurée pour établir les entrées NAT en fonction de la plage de ports externes.

8. Appareil selon la revendication 7, **caractérisé en ce que** l'appareil comprend en outre :
une unité d'assignation d'adresse de réseau public (58) située côté dispositif NAT, configurée pour assigner l'adresse IP de réseau public du message aller envoyé au réseau externe après sa traduction par le dispositif NAT, et inclure l'adresse IP de réseau public dans le message de réponse sous une certaine condition et transmettre le message de réponse avec l'adresse IP de réseau public incluse dans celui-ci au côté dispositif de réseau interne.

9. Appareil selon la revendication 8, **caractérisé en ce que** l'unité d'établissement d'entrée NAT (57) est spécifiquement configurée pour établir les entrées comportant l'adresse IP de réseau privé, la plage de ports externes et l'adresse IP de réseau public du dispositif de réseau interne.

10. Appareil selon la revendication 7, **caractérisé en ce que** l'appareil comprend en outre, côté dispositif de réseau interne :
une unité de transmission de message de requête (59), configurée pour transmettre un message de requête pour acquérir la plage de ports externes d'une traduction d'adresse de réseau, NAT avant de recevoir le message aller envoyé par l'équipement utilisateur au réseau externe; et
une unité d'acquisition de message de réponse (510), configurée pour acquérir un message de réponse, le message de réponse comportant la plage de ports externes après le processus NAT.

11. Appareil selon la revendication 10, **caractérisé en ce que** l'appareil comprend en outre, côté dispositif de réseau interne :
une unité d'acquisition d'adresse de réseau privé (511), configurée pour acquérir l'adresse IP de réseau privé du dispositif de réseau interne, et inclure l'adresse IP de réseau privé du dispositif de réseau interne dans le message de requête.

12. Appareil selon la revendication 10 ou 11, **caractérisé en ce que** le message de requête est utilisé en outre pour acquérir une adresse IP de réseau public traduite par le dispositif NAT.
